# EUROPEAN PATENT APPLICATION

(11) **EP 4 693 488 A1**
(43) Date of publication of application: **11.02.2026**
(21) Application number: 23929416.8
(22) Date of filing: 31.03.2023
(51) Int. Cl.: H01M 4/525, H01M 4/131, H01M 10/0525

(54) **POSITIVE ELECTRODE MATERIAL, AND ELECTROCHEMICAL DEVICE AND ELECTRIC DEVICE COMPRISING SAME**

(71) Applicant: Ningde Amperex Technology Limited, Ningde, Fujian 352100 (CN)
(72) Inventor: LIU, Xiaolang, Ningde, Fujian 352100 (CN)
(74) Representative: Kraus & Lederer PartGmbB
(86) International application number: PCT/CN2023/085543
(87) International publication number: WO 2024/197831

(57) **Abstract**

This application provides a positive electrode material, and an electrochemical apparatus and electric apparatus containing such positive electrode material. The positive electrode material includes a lithium cobalt oxide with a P6₃mc crystal structure. In a Raman spectrum of the positive electrode material, a peak height of a characteristic peak within a range of 490 cm⁻¹±5 cm⁻¹ is I₁, and a peak height of a characteristic peak within a range of 592 cm⁻¹±5 cm⁻¹ is I₂, satisfying 1 < I₂/I₁ < 5. A transition metal layer of the positive electrode of this application can be supported , reducing collapse of the transition metal layer and improving structural stability of the positive electrode material in a highly delithiated state, thereby enhancing cycling performance of the electrochemical apparatus.

## Description

### TECHNICAL FIELD

This application relates to the field of electrochemical technologies, and particularly to a positive electrode material, and an electrochemical apparatus and electric apparatus containing such positive electrode material.

### BACKGROUND

Lithium-ion batteries have been widely used in fields such as consumer electronic products by virtue of their characteristics such as high specific energy, high working voltage, low self-discharge rate, small size, and light weight.

With the rapid development of electric vehicles and mobile electronic devices, people have increasingly high requirements for energy density, safety, cycling performance, and the like of lithium-ion batteries. It is urgent to improve the positive electrode material in lithium-ion batteries to enhance the cycling performance of existing lithium-ion batteries.

### SUMMARY

This application is intended to provide a positive electrode material, and an electrochemical apparatus and electric apparatus containing such positive electrode material, to improve cycling performance of electrochemical apparatuses. Specific technical solutions are as follows.

According to a first aspect, this application provides a positive electrode material which includes a lithium cobalt oxide with a P6₃mc crystal structure. In a Raman spectrum of the positive electrode material, a peak height of a characteristic peak within a range of 490 cm⁻¹±5 cm⁻¹ is I₁, and a peak height of a characteristic peak within a range of 592 cm⁻¹±5 cm⁻¹ is I₂, satisfying 1 < I₂/I₁ < 5. In the positive electrode material of this application a transition metal layer can be supported, reducing collapse of the transition metal layer and improving structural stability of the positive electrode material in a highly delithiated state, thereby enhancing cycling stability of the electrochemical apparatus.

In some embodiments of this application, 1.2 ≤ I₂/I₁ ≤ 4.3. In this way, the positive electrode material exhibits relatively good cycling stability, thereby improving cycling performance of the electrochemical apparatus.

In some embodiments of this application, the lithium cobalt oxide contains an alkaline earth metal element M, and the lithium cobalt oxide is doped with the element M at Li sites. In this way, the element M doped into the Li sites can provide a pillar effect, which, in a highly delithiated state, can support the transition metal layer and reduce collapse of the transition metal layer, thereby improving structural stability of the positive electrode material in the highly delithiated state.

In some embodiments of this application, based on a molar mass of metal elements in the lithium cobalt oxide, excluding Li, Na, and M, a molar percentage of the element M in the lithium cobalt oxide is 0.5% to 5%.

In some embodiments of this application, the element M includes at least one of Ca or Mg. In this way, the element M can remain relatively stable and effectively dope into the Li sites to provide the pillar effect, resulting in relatively good cycling stability of the positive electrode material.

In some embodiments of this application, the lithium cobalt oxide further contains Na and a metal element Q, where the element Q includes at least one of Al, Zr, Ni, Mn, Y, Nb, La, Fe, Cu, Cr, Ti, W, Lu, or Yb. Based on a molar mass of metal elements in the lithium cobalt oxide, excluding Li, Na, and M, a molar percentage of Na in the lithium cobalt oxide is 0.5% to 5%, and a molar percentage of the element Q in the lithium cobalt oxide is 2% to 10%.

In some embodiments of this application, a general formula of the lithium cobalt oxide is NaₐLi_{b}M_{y}Co_{1-z}Q_{z}O_{2±n}Tₙ, where 0 < a ≤ 0.05, 0.65 ≤ b ≤ 1.1, 0 < y ≤ 0.05, 0 ≤ z ≤ 0.1, and 0 ≤ n ≤ 0.1, and the element M is an alkaline earth metal element, the element Q includes at least one of Al, Zr, Ni, Mn, Y, Nb, La, Fe, Cu, Cr, Ti, W, Lu, or Yb, and the element T is a halogen element. In this case, the positive electrode material exhibits relatively good cycling stability.

In some embodiments of this application, a Dᵥ50 of the positive electrode material is 5 µm to 25 µm. In this way, the positive electrode material has good cycling performance.

According to a second aspect, this application provides an electrochemical apparatus which includes a positive electrode plate. The positive electrode plate includes a positive electrode active material layer, and the positive electrode active material layer includes the positive electrode material according to any one of the foregoing embodiments. The positive electrode material provided in this application exhibits good cycling stability so that the electrochemical apparatus provided in this application has good cycling performance.

In some embodiments of this application, a charge cut-off voltage of the electrochemical apparatus is not lower than 4.50 V. In this way, the electrochemical apparatus has a higher reversible capacity and exhibits good cycling performance.

According to a third aspect, this application provides an electric apparatus which includes the electrochemical apparatus according to any one of the foregoing embodiments. The electrochemical apparatus provided in this application has good cycling performance, so the electric apparatus provided in this application has a relatively long service life.

Beneficial effects of this application are as follows: this application provides a positive electrode material, and an electrochemical apparatus and electric apparatus containing such positive electrode material. The positive electrode material includes a lithium cobalt oxide with a P6₃mc crystal structure. In a Raman spectrum of the positive electrode material, a peak height of a characteristic peak within a range of 490 cm⁻¹±5 cm⁻¹ is I₁, and a peak height of a characteristic peak within a range of 592 cm⁻¹±5 cm⁻¹ is I₂, satisfying 1 < I₂/I₁ < 5. In the positive electrode material of this application a transition metal layer can be supported in a highly delithiated state, reducing collapse of the transition metal layer and improving structural stability of the positive electrode material in a highly delithiated state, thereby enhancing cycling performance of the electrochemical apparatus.

Certainly, when any one of the products or methods of this application is implemented, all advantages described above are not necessarily achieved simultaneously.

### BRIEF DESCRIPTION OF DRAWINGS

The accompanying drawings described herein are intended for better understanding of this application and constitute a part of this application. Illustrative embodiments and descriptions thereof in this application are intended to interpret this application without constituting any inappropriate limitation on this application.

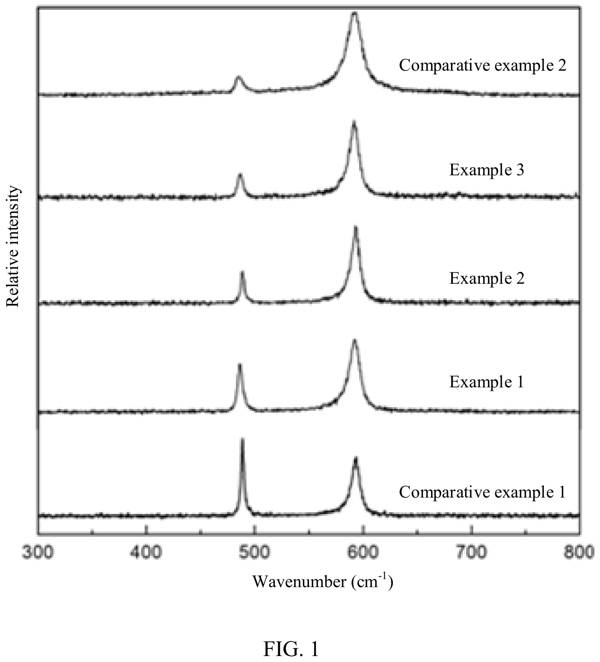

FIG. 1 is a Raman spectrum of Examples 1 to 3 and Comparative examples 1 and 2 in this application.

### DESCRIPTION OF EMBODIMENTS

To make the objectives, technical solutions, and advantages of this application more comprehensible, the following describes this application in detail with reference to accompanying drawings and embodiments. Apparently, the described embodiments are merely some but not all of the embodiments of this application. All other embodiments obtained by persons of ordinary skill in the art based on the embodiments of this application shall fall within the protection scope of this application.

It should be noted that, in the specific embodiments of this application, an example in which a lithium-ion battery is used as an electrochemical apparatus is used to illustrate this application. However, the electrochemical apparatus in this application is not limited to the lithium-ion battery.

According to a first aspect, this application provides a positive electrode material which includes a lithium cobalt oxide with a P6₃mc crystal structure. In a Raman spectrum of the positive electrode material, a peak height of a characteristic peak within a range of 490 cm⁻¹±5 cm⁻¹ is I₁, and a peak height of a characteristic peak within a range of 592 cm⁻¹±5 cm⁻¹ is I₂, satisfying 1 < I₂/I₁ < 5. In some embodiments, 1.2 ≤ I₂/I₁ ≤ 4.3. With the ratio of I₂ to I₁ controlled within the foregoing range, a transition metal layer of the positive electrode material can be supported in a highly delithiated state, reducing collapse of the transition metal layer and improving structural stability of the positive electrode material in the highly delithiated state, thereby enhancing cycling stability of the lithium-ion battery.

"Highly delithiated state" in this application refers to a state where the positive electrode material is in a highly delithiated state under a charge cut-off voltage ≥ 4.55 V, and an amount of lithium deintercalated from the positive electrode material is generally ≥ 0.7 mol compared with when the material is initially in a fully discharged state. For example, the composition of a material initially in a fully discharged state is Li_{0.9}CoO₂, and when the deintercalated lithium amount is 0.7 mol, the composition of the positive electrode material becomes Li_{0.2}CoO₂.

In some embodiments of this application, the lithium cobalt oxide contains an alkaline earth metal element M, and the lithium cobalt oxide is doped with the element M at Li sites. The element M doped into the Li sites can provide a pillar effect, which, in the highly delithiated state, can support the transition metal layer and reduce collapse of the transition metal layer, thereby improving structural stability of the positive electrode material in the highly delithiated state and enhancing cycling performance of the lithium-ion battery.

In some embodiments of this application, based on a molar mass of metal elements in the lithium cobalt oxide, excluding Li, Na, and M, a molar percentage of the element M in the lithium cobalt oxide is 0.5% to 5%.

In some embodiments of this application, the element M includes at least one of Ca or Mg. In this case, the element M can remain relatively stable and effectively dope into the Li sites to provide the pillar effect, resulting in relatively good cycling stability of the lithium-ion battery.

In some embodiments of this application, the lithium cobalt oxide further contains Na and a metal element Q, where the element Q includes at least one of Al, Zr, Ni, Mn, Y, Nb, La, Fe, Cu, Cr, Ti, W, Lu, or Yb. Based on a molar mass of the metal elements in the lithium cobalt oxide, excluding Li, Na, and M, a molar percentage of Na in the lithium cobalt oxide is 0.5% to 5%, and a molar percentage of the element Q in the lithium cobalt oxide is 2% to 10%. Lithium-ion batteries containing such positive electrode material exhibit good cycling performance.

In some embodiments of this application, a general formula of the lithium cobalt oxide is NaₐLi_{b}M_{y}Co_{1-z}Q_{z}O_{2±n}Tₙ, where 0 < a ≤ 0.05, 0.65 ≤ b ≤ 1.1, 0 < y ≤ 0.05, 0 ≤ z ≤ 0.1, and 0 ≤ n ≤ 0.1, and the element M is an alkaline earth metal element, the element Q includes at least one of Al, Zr, Ni, Mn, Y, Nb, La, Fe, Cu, Cr, Ti, W, Lu, or Yb, and the element T is a halogen element, where the element T includes at least one of F, Cl, Br, or I. With the positive electrode material of the foregoing general formula selected in this application, lithium-ion batteries exhibit relatively good cycling stability.

In some embodiments of this application, a Dᵥ50 of the positive electrode material is 5 µm to 25 µm. With Dᵥ50 of the positive electrode material controlled within the foregoing range, lithium-ion batteries exhibit good cycling performance.

In this application, Dᵥ50 refers to a particle size at 50% distribution by volume of particles of the positive electrode material.

A preparation method of the positive electrode material is not particularly limited in this application, provided that the objectives of this application can be achieved. For example, the preparation method of the positive electrode material may include, but is not limited to, the following steps:
Step 1: Dissolve a soluble cobalt salt and a metal salt containing the doping element Q in a solvent at a certain ratio to form an even mixture solution. Then add a precipitant and a complexing agent, and adjust pH to 5-9 to create a homogeneous precipitate. Afterwards, perform processes such as sintering, crushing, and sieving on the precipitate to obtain a metal oxide material;
Step 2: Weigh and mix the metal oxide material, a sodium-containing compound, and a compound containing the doping element M at a certain ratio, and incubate at a temperature of 750°C to 1050°C for 24 to 72 hours to obtain a sodium cobalt oxide with a P6₃mmc structure;
Step 3: Use the sodium cobalt oxide with a P6₃mmc structure as a precursor material, mix it evenly with a lithium-containing compound, and load the mixture into a corundum crucible. Carry out a solid-phase reaction at a temperature of 220°C to 280°C for 2 to 8 hours, and cool to obtain a mixture containing a positive electrode material of lithium cobalt oxide; and
Step 4: Crush the mixture material obtained in step 3, wash it multiple times with deionized water to remove soluble sodium salts and lithium salts from the mixture, and then perform processes such as suction filtration, drying, and sieving on residual powder to obtain the positive electrode material of lithium cobalt oxide.

In step 1, the soluble cobalt salt and metal salt containing the dopant element are at least one of a chloride, an acetate, a sulfate, or a nitrate. For example, the soluble cobalt salt includes cobalt chloride, cobalt acetate, cobalt nitrate, or cobalt sulfate, and the metal salt containing the dopant element includes nickel nitrate, manganese nitrate, or yttrium nitrate. The sodium-containing compound is at least one of Na₂O, Na₂O₂, Na₂CO₃, or NaOH, and preferably, Na₂O and Na₂CO₃. The compound containing the dopant element M is preferably a chloride or carbonate of the element M, such as calcium chloride, calcium carbonate, and magnesium carbonate. The mixture ratio of the soluble cobalt salt and the metal salt containing the dopant element Q is not particularly limited in this application, provided that the objectives of this application can be achieved. The two can be mixed at a designed ratio. For example, the soluble cobalt salt and the metal salt containing the dopant element Q are mixed at a ratio of 1:(0.02 to 0.11). The precipitant and the complexing agent are not particularly limited in this application, provided that the objectives of this application can be achieved. For example, the precipitant includes ammonium carbonate or ammonium bicarbonate, and the complexing agent includes ammonia water or sodium hydroxide. Amount of the precipitant and the complexing agent added is not particularly limited, provided that the objectives of this application can be achieved. For example, based on moles of Co, amount of the precipitant added is 1 to 2.5 times and amount of the complexing agent added is 1 to 1.5 times. Sintering temperature is not particularly limited in this application. For example, the sintering temperature may be 450°C to 700°C. In this application, a jet mill device may be used for crushing, and a vibrating sieve device may be used for particle size sieving to control the particle size of the metal oxide material.

In step 2, the mixture ratio of the metal oxide material, the sodium-containing compound, and the compound containing the dopant element M is not particularly limited in this application. They can be added at a designed ratio.

In step 3, the lithium-containing compound is not particularly limited in this application, provided that the objectives of this application can be achieved. For example, the lithium-containing compound includes but is not limited to lithium sulfate, lithium carbonate, lithium nitrate, lithium halide, lithium carboxylate, lithium squarate, or lithium alcohol.

A method of controlling peak height I₁ and I₂ is not particularly limited in this application. For example, I₂ typically increases with an increase in Co-O bending vibration intensity, and I₁ typically increases with an increase in Co-O stretching vibration intensity. Based on this, the bending and stretching vibration intensity of a Co-O bond can be controlled by adjusting a sintering process and doping, so as to control the range of the ratio of I₂ to I₁.

According to a second aspect, this application provides an electrochemical apparatus which includes a positive electrode plate. The positive electrode plate includes a positive electrode active material layer, and the positive electrode active material layer includes the positive electrode material according to any one of the foregoing embodiments. The positive electrode material provided in this application exhibits good cycling stability, so the electrochemical apparatus provided in this application has good cycling performance.

In some embodiments of this application, a charge cut-off voltage of the electrochemical apparatus is not lower than 4.50 V. In this way, the electrochemical apparatus has a higher reversible capacity and exhibits good cycling performance.

The electrochemical apparatus in this application includes a positive electrode plate, a negative electrode plate, a separator, and an electrolyte. The positive electrode plate includes a positive electrode current collector and a positive electrode active material layer. The positive electrode current collector is not particularly limited in this application, provided that the objectives of this application can be achieved. For example, the positive electrode current collector may include aluminum foil, aluminum alloy foil, or a composite current collector. In this application, thickness of the positive electrode current collector and the positive electrode active material layer is not particularly limited, provided that the objectives of this application can be achieved. For example, a thickness of the positive electrode current collector is 5 µm to 20 µm, and preferably 6µm to 18um. A thickness of the positive electrode active material layer on one side is 30 µm to 120 µm. In this application, the positive electrode active material layer may be disposed on one surface in a thickness direction of the positive electrode current collector, or on both surfaces in the thickness direction of the positive electrode current collector. Optionally, the positive electrode active material layer may further include a conductive agent and a binder. Type of the binder in the positive electrode active material layer is not particularly limited in this application, provided that the objectives of this application can be achieved. For example, the binder may include but is not limited to at least one of polyvinylidene fluoride, vinylidene fluoride-hexafluoropropylene copolymer, polyamide, polyacrylonitrile, polyacrylate ester, polyacrylic acid, polyacrylate salt, polyvinyl pyrrolidone, polyethylene glycol, polymethyl methacrylate, polytetrafluoroethylene, or polyhexafluoropropylene. Type of the conductive agent in the positive electrode active material layer is not particularly limited in this application, provided that the objectives of this application can be achieved. For example, the conductive agent may include but is not limited to at least one of conductive carbon black (Super P), carbon nanotubes (CNTs), carbon fibers, graphite flakes, Ketjen black, graphene, metal material, or a conductive polymer. The carbon nanotubes may include but are not limited to single-walled carbon nanotubes and/or multi-walled carbon nanotubes. The carbon fibers may include but are not limited to vapor-grown carbon fibers (VGCF) and/or nanocarbon fibers. The metal material may include but is not limited to metal powders and/or metal fibers, and specifically, the metal may include but is not limited to at least one of copper, nickel, aluminum, or silver. The conductive polymer may include but is not limited to at least one of a polyphenylene derivative, polyaniline, polythiophene, polyacetylene, or polypyrrole. A mass ratio of the positive active material, the conductive agent, and the binder in the positive electrode active material layer is not particularly limited in this application and can be selected by those skilled in the art according to an actual need, provided that the objectives of this application can be achieved.

The negative electrode plate is not particularly limited in this application, provided that the objectives of this application can be achieved. For example, the negative electrode plate includes a negative electrode current collector and a negative electrode active material layer. The negative electrode current collector is not particularly limited in this application, provided that the objectives of this application can be achieved. For example, the negative electrode current collector may include copper foil, copper alloy foil, nickel foil, stainless steel foil, titanium foil, foam nickel, or foam copper. The negative electrode active material layer in this application includes a negative active material. Type of the negative active material is not particularly limited in this application, provided that the objectives of this application can be achieved. For example, the negative active material may include at least one of natural graphite, artificial graphite, mesocarbon microbeads (MCMB), hard carbon, soft carbon, silicon, a silicon-carbon composite, SiOₓ (0<x<2), Li-Sn alloy, Li-Sn-O alloy, Sn, SnO, SnO₂, spinel lithium titanate Li₄Ti₅O₁₂, Li-Al alloy, or metallic lithium. In this application, thicknesses of the negative electrode current collector and the negative electrode active material layer are not particularly limited, provided that the objectives of this application can be achieved. For example, a thickness of the negative electrode current collector is 6 µm to 10 µm, and a thickness of the negative electrode active material layer is 30 µm to 130 µm. Optionally, the negative electrode active material layer may further include at least one of a conductive agent, a stabilizer, and a binder. Types of the conductive agent, the stabilizer, and the binder in the negative electrode active material layer are not particularly limited in this application, provided that the objectives of this application can be achieved. A mass ratio of the negative active material, the conductive agent, the stabilizer, and the binder in the negative electrode active material layer is not particularly limited in this application, provided that the objectives of this application can be achieved.

The electrochemical apparatus in this application further includes a separator. The separator is not particularly limited in this application, provided that the objectives of this application can be achieved. For example, the separator may include but is not limited to at least one of polyolefin (PO) separators primarily composed of polyethylene (PE), polypropylene (PP), and polytetrafluoroethylene, polyester film (such as polyethylene terephthalate (PET) film), cellulose film, polyimide film (PI), polyamide film (PA), spandex, aramid film, woven film, non-woven film (nonwoven fabric), microporous film, composite film, separator paper, calendared film, or spunbonded film, and preferably PP. The separator in this application may have a porous structure, whose pore size is not particularly limited, provided that the objectives of this application can be achieved. For example, the pore size may range from 0.01 µm to 1 µm. In this application, thickness of the separator is not particularly limited, provided that the objectives of this application can be achieved. For example, the thickness may range from 5 µm to 500 µm.

For example, the separator may include a substrate layer and a surface treatment layer. The substrate layer may be nonwoven fabric, film, or composite film with a porous structure, and material of the substrate layer may include but is not limited to at least one of polyethylene, polypropylene, polyethylene terephthalate, or polyimide. Optionally, polypropylene porous film, polyethylene porous film, polypropylene nonwoven fabric, polyethylene nonwoven fabric, or polypropylene-polyethylene-polypropylene porous composite film may be used. Optionally, at least one surface of the substrate layer is provided with a surface treatment layer. The surface treatment layer may be a polymer layer or an inorganic layer, or a layer formed by a mixture of a polymer and inorganic matter.

The inorganic layer may include but is not limited to inorganic particles and an inorganic layer binder. The inorganic particles are not particularly limited in this application, provided that the objectives of this application can be achieved. For example, they may include but are not limited to at least one of aluminium oxide, silicon oxide, magnesium oxide, titanium oxide, hafnium oxide, tin oxide, cerium oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The inorganic layer binder is not particularly limited in this application. For example, it may include but is not limited to at least one of polyvinylidene fluoride, vinylidene fluoride-hexafluoropropylene copolymer, polyamide, polyacrylonitrile, polyacrylate, polyacrylic acid, polyacrylate, polyvinyl pyrrolidone, polyethylene glycol, polymethyl methacrylate, polytetrafluoroethylene, or polyhexafluoropropylene. The polymer layer contains a polymer, and material of the polymer may include but is not limited to at least one of polyamide, polyacrylonitrile, acrylate polymers, polyacrylic acid, polyacrylate, polyvinyl pyrrolidone, polyethylene glycol, polyvinylidene fluoride, or polyvinylidene fluoride-hexafluoropropylene.

In this application, the electrochemical apparatus further includes an electrolyte. The electrolyte includes a lithium salt and a non-aqueous solvent. The lithium salt may include at least one of LiPF₆, LiBF₄, LiClO₄, LiB(C₆H₅)₄, LiCH₃SO₃, LiCF₃SO₃, LiN(SO₂CF₃)₂, LiC(SO₂CF₃)₃, Li₂SiF₆, lithium bisoxalate borate (LiBOB), or lithium difluoroborate. Concentration of the lithium salt in the electrolyte is not particularly limited in this application, provided that the objectives of this application can be achieved. For example, the concentration of the lithium salt in the electrolyte is 0.9 mol/L to 1.5 mol/L. Specifically, the concentration of the lithium salt in the electrolyte may be 0.9 mol/L, 1.0 mol/L, 1.1 mol/L, 1.3 mol/L, 1.5 mol/L, or a range defined by any two of these numbers. The non-aqueous solvent is not particularly limited in this application, provided that the objectives of this application can be achieved. For example, it may include but is not limited to at least one of a carbonate compound, a carboxylate compound, an ether compound, or another organic solvent. The carbonate compound may include but is not limited to at least one of a linear carbonate compound, a cyclic carbonate compound, or a fluorinated carbonate compound. The linear carbonate compound may include but is not limited to at least one of dimethyl carbonate (DMC), diethyl carbonate (DEC), dipropyl carbonate (DPC), methyl propyl carbonate (MPC), ethyl propyl carbonate (EPC), or methyl ethyl carbonate (MEC). The cyclic carbonate compound may include but is not limited to at least one of ethylene carbonate (EC), propylene carbonate (PC), butylene carbonate (BC), or vinyl ethylene carbonate (VEC). The fluorinated carbonate compound may include but is not limited to at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl-ethyl carbonate, 1-fluoro-1-methyl-ethyl carbonate, 1,2-difluoro-1-methyl-ethyl carbonate, 1,1,2-trifluoro-2-methyl-ethyl carbonate, or trifluoromethyl carbonate. The carboxylate compound may include but is not limited to at least one of methyl formate, methyl acetate, ethyl acetate, propyl acetate, tert-butyl acetate, methyl propionate, ethyl propionate, propyl propionate, γ-butyrolactone, decalactone, valerolactone, or caprolactone. The ether compound may include but is not limited to at least one of dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The another organic solvent may include but are not limited to at least one of dimethyl sulfoxide, 1,2-dioxolane, cyclobutanone, methylcyclobutanone, 1,3-dimethyl-2-imidazolidinone, N-methyl-2-pyrrolidone, dimethylformamide, acetonitrile, trimethyl phosphate, triethyl phosphate, or trioctyl phosphate.

The electrochemical apparatus in this application is not particularly limited and may include any apparatus that undergoes an electrochemical reaction. In some embodiments of this application, the electrochemical apparatus may include but is not limited to a lithium-ion secondary battery (lithium-ion battery), a lithium polymer secondary battery, or a lithium-ion polymer secondary battery. In some embodiments, structure of an electrode assembly may include a wound structure or a stacked structure.

A preparation process of the electrochemical apparatus in this application is well known to those skilled in the art and is not particularly limited in this application. For example, the process may include but is not limited to the following steps: stacking a positive electrode plate, a separator, and a negative electrode plate in order, performing operations such as winding or folding on the resulting stack as required to obtain an electrode assembly with a wound structure, placing the electrode assembly in a packaging bag, injecting an electrolyte into the packaging bag, and sealing the packaging bag to obtain the electrochemical apparatus; or, stacking the positive electrode plate, the separator, and the negative electrode plate in order, fixing four corners of the entire stacked structure with tape to obtain an electrode assembly in a stacked structure, placing the electrode assembly in a packaging bag, injecting an electrolyte into the packaging bag, and sealing the packaging bag to obtain the electrochemical apparatus. Additionally, an overcurrent protection component, a conductive plate, and the like may be placed in the packaging bag as required to prevent pressure rise and overcharging/over-discharging inside the electrochemical apparatus. The packaging bag is not particularly limited in this application, and can be selected by those skilled in the art according to an actual need, provided that the objectives of this application can be achieved. For example, an aluminum-plastic film packaging bag can be used.

According to a third aspect, this application provides an electric apparatus which includes the electrochemical apparatus according to any of the foregoing embodiments. The electrochemical apparatus provided in this application has good cycling performance, so the electric apparatus provided in this application has a relatively long service life.

The electric apparatus is not particularly limited in this application and may be a known electric apparatus used in the prior art. For example, the electric apparatus may include but is not limited to laptops, pen-input computers, mobile computers, e-book players, portable phones, portable fax machines, portable copiers, portable printers, stereo headphones, video recorders, LCD televisions, portable cleaners, portable CD players, mini discs, transceivers, electronic notebooks, calculators, memory cards, portable recorders, radios, backup power supplies, motors, automobiles, motorcycles, electric bicycles, bicycles, lighting fixtures, toys, game consoles, clocks, electrical tools, flashlights, cameras, large-scale household batteries, or lithium-ion capacitors.

### Examples

The following describes the embodiments of this application more specifically by using examples and comparative examples. Various tests and evaluations were performed in the following methods. In addition, unless otherwise specified, "parts" and "%" are based on weight.

### Test method and equipment:

### Raman test:

The positive electrode materials prepared in various examples and comparative examples were tested using a spectrometer (Jobin Yvon LabRAM HR) with a light source of 532 nm and a test range from 200 cm⁻¹ to 4000 cm⁻¹.

### Positive electrode material particle size test:

The positive electrode materials prepared in various examples and comparative examples were tested using a Malvern particle size tester (instrument model: Master Sizer 2000). A particle size of the positive electrode active material where the cumulative distribution by volume reached 50% as counted from the small particle size side was Dᵥ50.

### XRD test:

The positive electrode materials were tested using an X-ray powder diffractometer (XRD, instrument model: Bruker D8 ADVANCE), with Cu Kα as a target material, a test voltage of 40 KV, a test current of 35 mA, a scanning angle range of 10° to 90°, and a scanning speed of 0.02°/s. The strongest diffraction peak intensity was required to be greater than 10,000 counts. The XRD pattern obtained was refined using Fullprof software to determine a phase structure and dopant element occupancy.

### Positive electrode material elemental composition test:

The positive electrode materials were tested using an inductively coupled plasma spectrometer (ICP, instrument model: PE Optima 7000DV) to determine the contents of Li and metal elements. First, an appropriate amount of powder sample was weighed and added to about 10 mL of aqua regia. The mixture was heated at around 185°C on a plate heater for 30 to 50 minutes to ensure complete dissolution of the sample. Then, the sample was tested.

### Cycling performance test:

After a button cell was aged in a 25°C environment for 24 hours, the prepared button cell was subjected to a charge-discharge test under a voltage range of 3 V to 4.6 V. The first two cycles were carried out at a charge and discharge rate of 0.1C for activation of the cell, and subsequent cycles were performed at a charge and discharge rate of 0.5C. The battery capacity retention rate was calculated based on the battery capacity of the third cycle, where 1C = 273 mA/g.

Capacity retention rate after n cycles= discharge capacity of the n-th cycle/discharge capacity of the third cycle × 100%.

### Example 1

### <Preparation of positive electrode material>

13.35 kg of cobalt sulfate heptahydrate (CoSO₄·7H₂O) and 0.66 kg of nickel sulfate hexahydrate (NiSO₄·6H₂O) were weighed as raw materials, and dissolved in deionized water with rapid stirring. Then, ammonium carbonate and ammonia water were added to adjust the solution pH to 8. After a complete reaction, a homogeneous carbonate precipitate was created. The precipitate was sintered at 650°C for 12 hours. After crushing and sieving, the metal oxide (Co_{0.95}Ni_{0.05})₃O₄ was obtained.

Sodium carbonate (Na₂CO₃) and calcium carbonate (CaCO₃) were evenly mixed with the obtained metal oxide at a metal element molar ratio of Na:Ca:(Co+Ni) = 0.8:0.01:1. The mixture was placed in an 830°C environment for 48 hours. After crushing and sieving, a sodium cobalt oxide material with a P6₃mmc crystal structure was obtained.

The obtained sodium cobalt oxide material, lithium nitrate (LiNO₃), and lithium chloride (LiCl) were evenly mixed at a molar ratio of 1:4:1. The mixture was loaded into a corundum crucible and let to react first at a 235°C environment for 4 hours and then at a 250°C environment for 4 hours. After cooling, a mixture containing a positive electrode material of lithium cobalt oxide was obtained.

The obtained mixture containing the positive electrode material of lithium cobalt oxide was crushed and washed multiple times with deionized water to remove soluble sodium salts and lithium salts in the mixture until conductivity of supernatant was less than 200 µS/cm. Then, residual powder was subjected to suction filtration, drying, and sieving to obtain a lithium cobalt oxide material. Dᵥ50 of the lithium cobalt oxide material was 9.3 µm.

### <Preparation of positive electrode plate>

The obtained lithium cobalt oxide as a positive electrode active material, conductive carbon black (SP) as a conductive agent, and polyvinylidene fluoride (PVDF) as a binder were mixed at a mass ratio of 80:10:10. N-methyl-2-pyrrolidone (NMP) was added as a solvent and a thorough stir was applied under the action of a vacuum mixer to obtain a positive electrode slurry with a solid content of 60wt%. A 12 µm aluminum foil was used as a positive electrode current collector. A coating with a thickness of 100 µm was applied on the current collector aluminum foil. The coated foil was baked first in a blast drying oven at 90°C for 4 hours and then in a vacuum drying oven at 110°C for 24 hours. The fully dried electrode plate was subjected to cold pressing, die cutting, weighing, and other processes to obtain a circular positive electrode plate with a diameter of 1.4 cm.

### <Preparation of negative electrode plate>

A lithium metal plate was used as a counter electrode plate.

### <Preparation of electrolyte>

In a dry argon atmosphere glove box, fluoroethylene carbonate (FEC), ethylene carbonate (EC), and diethyl carbonate (DEC) were mixed at a volume ratio of 1:1:8 to obtain an organic solvent. Then, a lithium salt LiPF₆ was added to the organic solvent, and dissolved and evenly mixed to obtain an electrolyte. The concentration of LiPF₆ therein was 1 mol/L.

### <Preparation of separator>

A porous PE film with thickness of 7 µm was used as a separator.

### <Preparation of lithium-ion battery>

Under a dry argon atmosphere, a button cell was assembled using the positive electrode plate, the separator, the negative electrode plate, and the electrolyte.

### Example 2

The only difference from Example 1 lies in the step of preparation of the positive electrode material: The metal element molar ratio of Na:Ca:(Co+Ni) in Na₂CO₃, CaCO₃, and the obtained metal oxide was 0.8:0.03:1.

### Example 3

The only difference from Example 1 lies in the step of preparation of the positive electrode material: A metal element molar ratio of Na:Ca:(Co+Ni) in Na₂CO₃, CaCO₃, and the obtained metal oxide was 0.8:0.05:1.

### Example 4

The only difference from Example 1 lies in the step of preparation of the positive electrode material:
13.49 kg of cobalt sulfate heptahydrate (CoSO₄·7H₂O) and 0.34 kg of manganese sulfate monohydrate (MnSO₄·H₂O) were weighed as raw materials, and dissolved in deionized water with rapid stirring. Then, ammonium carbonate was added to adjust the solution pH to 8. After a complete reaction, a homogeneous carbonate precipitate was created. The precipitate was sintered at 650°C for 12 hours. After crushing and sieving, the metal oxide (Co_{0.96}Mn_{0.04})₃O₄ was obtained.

Sodium carbonate (Na₂CO₃) and magnesium oxide (MgO) were evenly mixed with the obtained metal oxide at a metal element molar ratio of Na:Mg:(Co+Mn) = 0.8:0.01:1. The mixture was placed in an 850°C environment for 48 hours. After crushing and sieving, a sodium cobalt manganese oxide material with a P6₃mmc crystal structure was obtained.

The obtained sodium cobalt oxide material, lithium nitrate (LiNO₃), and lithium hydroxide (LiOH) were evenly mixed at a metal element molar ratio of 1:4:1. The mixture was loaded into a corundum crucible and let to react at a 250°C environment of for 8 hours. After cooling, a mixture containing a positive electrode material of lithium cobalt manganese oxide was obtained.

The obtained mixture was crushed and washed multiple times with deionized water to remove soluble sodium salts and lithium salts in the mixture until conductivity of supernatant is less than 200 µS/cm. Then, residual powder was subjected to suction filtration, drying, and sieving to obtain a lithium cobalt manganese oxide material. Dᵥ50 of the lithium cobalt manganese oxide material was 10.2 µm.

### Example 5

The only difference from Example 4 lies in the step of preparation of the positive electrode material: The metal element molar ratio of Na:Mg:(Co+Mn) in Na₂CO₃, MgO, and the obtained metal oxide was 0.8:0.03:1.

### Example 6

The only difference from Example 4 lies in the step of preparation of the positive electrode material: The metal element molar ratio of Na:Mg:(Co+Mn) in Na₂CO₃, MgO, and the obtained metal oxide was 0.8:0.05:1

### Examples 7 to 11

The only difference from Example 1 lies in the step of preparation of the positive electrode material: Y(NO₃)₃, Nb(NO₃)₅, La(NO₃)₃, Fe(NO₃)₃, Cu(NO₃)₂ were used to replace NiSO₄·6H₂O to adjust the type of the element Q as shown in Table 1, and the amount of CaCO₃ added was changed to adjust the Ca content as shown in Table 1.

### Examples 12 to 16

The only difference from Example 4 lies in the step of preparation of the positive electrode material: Cr(NO₃)₃, TiCl₄, W(NO₃)₃, Lu(NO₃)₃, and Yb(NO₃)₂ were used to replace MnSO₄·H₂O to adjust the type of the element Q as shown in Table 1, and the amount of MgO added was changed to adjust the Mg content as shown in Table 1.

### Example 17

The only difference from Example 4 lies in the step of preparation of the positive electrode material: 2 wt% NH₄F was added during the sintering of the mixture of sodium carbonate (Na₂CO₃), magnesium oxide (MgO), and the obtained metal oxide.

### Example 18

The only difference from Example 4 lies in the step of preparation of the positive electrode material: 5 wt% NH₄Cl was added during the sintering of the mixture of sodium carbonate (Na₂CO₃), magnesium oxide (MgO), and the obtained metal oxide.

### Comparative example 1

The only difference from Example 1 lies in the step of preparation of the positive electrode material: CaCO₃ was not added, and a metal element molar ratio of Na:(Co+Ni) in Na₂CO₃ and the obtained metal oxide was 0.8:1.

### Comparative example 2

The only difference from Example 1 lies in the step of preparation of the positive electrode material: A metal element molar ratio of Na:Ca:(Co+Ni) in Na₂CO₃, CaCO₃, and the obtained metal oxide was 0.8:0.07: 1.

### Comparative example 3

The only difference from Example 2 lies in the step of preparation of the positive electrode material: Ca was introduced in the form of Ca(NO₃)₂ during a precursor co-precipitation stage.

### Comparative example 4

The only difference from Example 5 lies in the step of preparation of the positive electrode material: Mg was introduced in the form of Mg(NO₃)₂ during a precursor co-precipitation stage.

Preparation parameters and performance parameters of the examples and comparative examples are given in Table 1.

**Table 1**

| | NaₐLi_{b}M_{y}Co_{1-z}Q_{z}O_{2±n}Tₙ | | | | | | | | | | Raman peak 1 | Raman peak 2 | I₂/I₁ | Capacity retention rate after 100 cycles |
|---|---|---|---|---|---|---|---|---|---|---|---|---|---|---|
| | a | b | y | z | n | M | Q | T | P63mc crystal structure? | Particle Size Dᵥ50 (µm) | | | | |
| Example 1 | 0.03 | 0.92 | 0.01 | 0.05 | / | Ca | Ni | / | Yes | 9.3 | 489.3 | 592.6 | 1.3 | 90% |
| Example 2 | 0.01 | 0.91 | 0.03 | 0.05 | / | Ca | Ni | / | Yes | 8.9 | 488.6 | 593.5 | 2.4 | 93% |
| Example 3 | 0.04 | 0.91 | 0.05 | 0.05 | / | Ca | Ni | / | Yes | 9.6 | 488.5 | 593.9 | 3.7 | 87% |
| Example 4 | 0.02 | 0.93 | 0.01 | 0.04 | / | Mg | Mn | / | Yes | 10.2 | 487.8 | 593.4 | 2.4 | 86% |
| Example 5 | 0.02 | 0.92 | 0.03 | 0.04 | / | Mg | Mn | / | Yes | 11.5 | 491.4 | 593.5 | 2.6 | 88% |
| Example 6 | 0.03 | 0.91 | 0.05 | 0.04 | / | Mg | Mn | / | Yes | 11.9 | 490.2 | 591.7 | 1.2 | 93% |
| Example 7 | 0.04 | 0.91 | 0.04 | 0.04 | / | Ca | Y | / | Yes | 6.0 | 488.9 | 594.7 | 2.6 | 95% |
| Example 8 | 0.02 | 0.90 | 0.02 | 0.03 | / | Ca | Nb | / | Yes | 5.4 | 492.6 | 593.4 | 4.1 | 85% |
| Example 9 | 0.02 | 0.92 | 0.02 | 0.08 | / | Ca | La | / | Yes | 12.5 | 492.7 | 594.0 | 2.7 | 93% |
| Example 10 | 0.04 | 0.92 | 0.04 | 0.01 | / | Ca | Fe | / | Yes | 17.4 | 488.4 | 594.9 | 2.6 | 90% |
| Example 11 | 0.04 | 0.91 | 0.03 | 0.03 | / | Ca | Cu | / | Yes | 15.0 | 490.4 | 593.8 | 4.3 | 91% |
| Example 12 | 0.05 | 0.93 | 0.04 | 0.08 | / | Mg | Cr | / | Yes | 11.4 | 490.0 | 594.6 | 3.4 | 94% |
| Example 13 | 0.03 | 0.92 | 0.02 | 0.04 | / | Mg | Ti | / | Yes | 7.8 | 488.6 | 594.4 | 3.4 | 88% |
| Example 14 | 0.03 | 0.90 | 0.01 | 0.10 | / | Mg | W | / | Yes | 8.2 | 489.8 | 592.7 | 2.7 | 86% |
| Example 15 | 0.01 | 0.92 | 0.02 | 0.10 | / | Mg | Lu | / | Yes | 11.6 | 491.5 | 591.2 | 3.5 | 85% |
| Example 16 | 0.02 | 0.90 | 0.01 | 0.05 | / | Mg | Yb | / | Yes | 10.8 | 489.7 | 592.6 | 3.8 | 92% |
| Example 17 | 0.02 | 0.93 | 0.01 | 0.04 | 0.03 | Mg | Mn | F | Yes | 15.3 | 487.6 | 593.3 | 2.6 | 94% |
| Example 18 | 0.02 | 0.93 | 0.01 | 0.04 | 0.08 | Mg | Mn | Cl | Yes | 13.5 | 487.8 | 593.6 | 2.9 | 89% |
| Comparative example 1 | 0.04 | 0.91 | / | 0.05 | / | / | Ni | / | Yes | 12.5 | 488.7 | 593.0 | 0.7 | 67% |
| Comparative example 2 | 0.03 | 0.92 | 0.07 | 0.05 | / | Ca | Ni | / | Yes | 13.9 | 487.0 | 594.3 | 5.5 | 62% |
| Comparative example 3 | 0.01 | 0.90 | 0.03 | 0.05 | | Ca | Ni | / | Yes | 10.2 | 488.8 | 593.4 | 0.8 | 68% |
| Comparative example 4 | 0.02 | 0.91 | 0.03 | 0.04 | | Mg | Mn | / | Yes | 9.4 | 491.5 | 593.5 | 0.9 | 64% |

| | | | | | | | | | | | | | | |
|---|---|---|---|---|---|---|---|---|---|---|---|---|---|---|
| Note: "/" in Table 1 indicates absence of a corresponding parameter or substance. | | | | | | | | | | | | | | |

Refer to Table 1. It can be seen from Examples 1 to 18 and Comparative examples 1 to 4 that the capacity retention rate after 100 cycles of the button cell is significantly improved. This indicates that controlling the relationship between peak height I₁ and peak height I₂ of the positive electrode material to be within the range specified in this application is conducive to improving cycling performance of the lithium-ion battery.

FIG. 1 shows a Raman spectrum of Examples 1 to 3 and Comparative examples 1 and 2. From FIG. 1, two Raman characteristic peaks can be observed, with peak positions located at 490±5 cm⁻¹ and 592±5 cm⁻¹, respectively. The former represents a bending vibration mode of O-Co-O, and the latter represents a stretching vibration mode of Co-O.

From Examples 1 to 3 and Comparative examples 1 and 2, it can be seen that a higher relative content of the M element means a larger peak height ratio I₂/I₁, and when I₂/I₁ is within the range specified in this application, the button cell exhibits excellent cycling performance. This indicates that controlling the relationship between peak height I₁ and peak height I₂ of the positive electrode material to be within the range specified in this application is conducive to improving cycling performance of the lithium-ion battery. From Example 2 and Comparative example 3, as well as Example 5 and Comparative example 4, it can be seen that under the same doping amount of the element M, when the element M is introduced during a co-precipitation precursor stage, the obtained material has a smaller I₂/I₁ ratio, while when the element M is introduced during a sodium cobalt oxide sintering stage, the obtained material has a larger I₂/I₁ ratio. A possible explanation for this is that when M is introduced in a precursor stage through co-precipitation, M tends to be uniformly doped and distributed in a bulk phase in the target material, whereas when M is introduced during the sodium cobalt oxide sintering stage, M may be in gradient distribution in the target material, with higher doping concentration at a surface than in the bulk phase, resulting in a higher ratio of I₂/I₁, so that an actual improvement effect on the stability of material structure, especially stability of a surface interface, is more significant.

From Examples 1 to 3 and Comparative examples 1 and 2, it can be further observed that when the relative content of Ni is 0.05 mol, as the relative content of Ca doped into the Li sites increases, the Raman characteristic peak height ratio I₂/I₁ of the material shows an increasing trend, and the capacity retention rate of a corresponding battery after 100 cycles shows a trend of an initial increase followed by a decrease. When no Ca is doped, the Raman characteristic peak height ratio I₂/I₁ of the material obtained in Comparative example 1 is approximately 0.7, and the capacity retention rate after 100 cycles of the battery with the material is relatively low, at only 67%. With an increase of the Ca doping amount, the Raman characteristic peak height ratios I₂/I₁ of Examples 1 to 3 range from 1 to 5, and the battery cycle capacity retention rate is significantly improved, reaching 87% to 93%. When the Ca doping amount is further increased to 0.07, the Raman characteristic peak height ratio I₂/I₁ of the material obtained from Comparative example 2 is 5.5, and the battery cycle capacity retention rate starts to decrease, reaching only 62%. ICP testing is performed on a fully charged positive electrode plate obtained after 100 cycles of the material from Examples 1 to 3, and measured Ca content remained the same as in an initial powder state, indicating that Ca does not undergo a deintercalation reaction during a charge-discharge process. It is speculated that the main reason for the improvement caused by Ca doping is that Ca provides a pillar effect at the Li sites, stabilizing the structure. However, due to a relatively large radius difference between Ca²⁺ and Li⁺, excessive doping will disrupt the balance of the overall crystal structure and deteriorate the structural stability. By comparing Examples 1 to 3 with Comparative examples 1 and 2, it can be concluded that the preferred doping concentration of Ca²⁺ should not exceed 5% (molar percentage).

Refer to Table 1. The type of the metal element Q in the lithium cobalt oxide typically also affects the performance of the button cell. From Examples 7 to 16, it can be seen that controlling the type of the metal element Q to be within the range specified in this application is conducive to obtaining a lithium-ion battery with high cycling performance.

Comparing Examples 17 and 18 with Example 4, it can be seen that when a halogen element is present in the lithium cobalt oxide, cycling stability of the material can be further improved. Compared with Example 4, Examples 17 and 18 undergo F and Cl doping respectively, and exhibit improved capacity retention rates after 100 cycles of the obtained material, increasing from 86% in Example 4 to 94% and 89%, respectively.

The foregoing descriptions are merely preferable embodiments of this application but are not intended to limit this application. Any modifications, equivalent replacements, or improvements made without departing from the spirit and principle of this application shall fall within the protection scope of this application.

## Claims

1. A positive electrode material, comprising a lithium cobalt oxide with a P6₃mc crystal structure, wherein
in a Raman spectrum of the positive electrode material, a peak height of a characteristic peak within a range of 490 cm⁻¹±5 cm⁻¹ is I₁, and a peak height of a characteristic peak within a range of 592 cm⁻¹±5 cm⁻¹ is I₂, satisfying 1 < I₂/I₁ < 5.

2. The positive electrode material according to claim 1, wherein 1.2 ≤ I₂/I₁ ≤ 4.3.

3. The positive electrode material according to claim 1, wherein the lithium cobalt oxide contains an alkaline earth metal element M, satisfying at least one of the following:
(1) the lithium cobalt oxide is doped with the element M at Li sites; or
(2) based on a molar mass of metal elements in the lithium cobalt oxide, excluding Li, Na, and M, a molar percentage of the element M in the lithium cobalt oxide is 0.5% to 5%.

4. The positive electrode material according to claim 3, wherein the element M comprises at least one of Ca or Mg.

5. The positive electrode material according to claim 3, wherein
the lithium cobalt oxide further comprises Na and a metal element Q;
the element Q comprises at least one of Al, Zr, Ni, Mn, Y, Nb, La, Fe, Cu, Cr, Ti, W, Lu, or Yb; and
based on a molar mass of metal elements in the lithium cobalt oxide, excluding Li, Na, and M, a molar percentage of Na in the lithium cobalt oxide is 0.5% to 5%, and a molar percentage of the element Q in the lithium cobalt oxide is 2% to 10%.

6. The positive electrode material according to claim 1, wherein
a general formula of the lithium cobalt oxide is NaₐLi_{b}M_{y}Co_{1-z}Q_{z}O_{2±n}Tₙ, wherein
0 < a ≤ 0.05, 0.65 ≤ b ≤ 1.1, 0 < y ≤ 0.05, 0 ≤ z ≤ 0.1, and 0 ≤ n ≤ 0.1, and
the element M is an alkaline earth metal element, the element Q comprises at least one of Al, Zr, Ni, Mn, Y, Nb, La, Fe, Cu, Cr, Ti, W, Lu, or Yb, and the element T is a halogen element.

7. The positive electrode material according to claim 1, wherein a Dᵥ50 of the positive electrode material is 5 µm to 25 µm.

8. An electrochemical apparatus, comprising a positive electrode plate, wherein the positive electrode plate comprises a positive electrode active material layer, and the positive electrode active material layer comprises the positive electrode material according to any one of claims 1 to 7.

9. The electrochemical apparatus according to claim 8, wherein a charge cut-off voltage of the electrochemical apparatus is not lower than 4.50 V.

10. An electric apparatus, comprising the electrochemical apparatus according to claim 8 or 9.
